**Europäisches Patentamt**

**European Patent Office**

**Office européen des brevets**

(19)

(11) Numéro de publication : **0 311 503 B1**

(12) **FASCICULE DE BREVET EUROPEEN**

(45) Date de publication du fascicule du brevet :
25.09.91 Bulletin 91/39

(51) Int. Cl.⁵ : **G01T 1/00, G01T 1/20**

(21) Numéro de dépôt : **88402502.4**

(22) Date de dépôt : **04.10.88**

(54) Détecteur multi-radiations, notamment détecteur de rayons X à double énergie.

(30) Priorité : 09.10.87 FR 8713963

(43) Date de publication de la demande :
12.04.89 Bulletin 89/15

(45) Mention de la délivrance du brevet :
25.09.91 Bulletin 91/39

(84) Etats contractants désignés :
DE GB NL

(56) Documents cités :
EP-A- 0 115 125
EP-A- 0 212 836
GB-A- 2 023 285

(73) Titulaire : THOMSON-CSF
51, Esplanade du Général de Gaulle
F-92800 Puteaux (FR)

(72) Inventeur : Roziere, Guy THOMSON-CSF SCPI
19, avenue de Messine
F-75008 Paris (FR)

(74) Mandataire : Guérin, Michel et al
THOMSON-CSF SCPI
F-92045 PARIS LA DEFENSE CEDEX 67 (FR)

Jouve, 18, rue Saint-Denis, 75001 PARIS

## Description

L'invention concerne les détecteurs qui permettent de détecter des radiations ayant des énergies différentes et, notamment, des détecteurs des rayons X qui ont au moins deux énergies différentes.

Les rayons X sont communément utilisés en radiologie pour effectuer des examens de matériaux car leur atténuation est fonction de leur énergie et d'un coefficient qui est caractéristique du matériau examiné pour cette énergie. Les rayons X qui sont fournis par les tubes d'émission ont un spectre d'énergie assez étendu de sorte que le rayonnement transmis par les matériaux examinés contient une diversité d'informations sur lesdits matériaux. Une partie de cette diversité est perdue quand le rayonnement transmis est appliqué à un seul détecteur qui présente une fonction déterminée de sensibilité en fonction de l'énergie. Ainsi, avec un seul détecteur, le fait que les fortes énergies soient plus représentatives de l'absorption par les matériaux lourds n'est pas exploitable pour mettre en évidence dans le rayonnement transmis la nature des matériaux traversés. Par contre, si l'on place sur le parcours des rayons transmis deux détecteurs dont les sensibilités sont maximales pour des énergies différentes et dont l'une est plus représentative d'un des constituants du matériau examiné, alors il sera possible, après pondération des signaux détectés par des coefficients appropriés et soustraction desdits signaux pondérés, d'éliminer l'effet de ce matériau. On peut ainsi, sur une image médicale thoracique, faire disparaître le squelette et mettre en valeur d'autres organes.

L'usage simultané de deux détecteurs de sensibilités différentes est connu et de tels détecteurs dits "double énergie" sont réalisés, par exemple, par superposition de deux détecteurs. Un premier détecteur est disposé pour recevoir tout le rayonnement transmis de manière à détecter les rayons de faible énergie et à ne transmettre à un second détecteur sous-jacent que des rayons ayant une plus grande énergie. A cet effet, le premier détecteur est prévu pour des énergies de vingt à trente kev et utilise par exemple un oxyde ou oxysulfure d'yttrium, parfois un oxysulfure de lantane, tandis que le second est prévu pour des énergies de quarante à cent kev et utilise par exemple un oxysulfure de gadolinium, un tungstate de calcium ou un tungstate de cadmium. Un détecteur dit "double énergie", du type ci-dessus mentionné, est décrit dans le document de Brevet Européen EP-A-0115125.

Pour qu'un système de radiologie comportant un détecteur double énergie fonctionne correctement, il faut obtenir et maintenir, pour tous les angles d'incidence, un alignement parfait du foyer du tube à rayons X, de l'élément observé et des deux détecteurs avec une précision égale à la dimension du plus petit élément discernable. Cet impératif géométrique est difficile à réaliser et à maintenir dans le temps et est coûteux. En outre, dans le cas de tubes à rayons X à anode tournante, il faut aussi tenir compte d'une certaine fluctuation du point d'origine des rayons X.

Suivant un autre mode de réalisation de l'art antérieur, les deux détecteurs sont placés côte à côte. Dans ce cas, dans le traitement des signaux reçus de chaque détecteur, il faut tenir compte du décalage entre les deux détecteurs qui ne voient pas la même chose au même moment. En outre, même en effectuant cette correction de décalage, il reste néanmoins une source d'erreurs due au fait que les parties du corps humain qui sont examinées ne sont pas complètement immobiles pendant le temps de déplacement correspondant au décalage des détecteurs.

Un but de la présente invention est donc de réaliser un détecteur de rayons X double énergie qui ne présente pas les inconvénients précités des détecteurs de l'art antérieur.

De plus en plus, on utilise des analyseurs d'objets dans lequels le rayonnement utilisé n'est pas constitué par des rayons X mais par des rayons gamma ou encore par un flux de neutrons qui sont plus ou moins absorbés selon la nature des composants de l'objet et de l'énergie contenue dans le rayonnement incident. Dans ces analyseurs, les détecteurs sont également réalisés avec un scintillateur qui transforme le rayonnement transmis par l'objet en une émission d'une autre longueur d'onde, émission dont on mesure l'intensité. Dans ce domaine, il semble également intéressant d'utiliser des détecteurs double énergie de manière à recueillir un maximum d'informations de l'objet examiné et la seule manière de les réaliser est de combiner deux détecteurs comme décrits ci-dessus pour les rayons X.

Un autre but de la présente invention est aussi de réaliser un détecteur de rayons gamma ou de flux neutroniques du type double énergie en utilisant un détecteur unique et un seul scintillateur.

D'une manière générale, le but de l'invention est de réaliser un détecteur multi-radiations qui permet de détecter plusieurs radiations d'énergies différentes en utilisant un détecteur unique comportant un seul scintillateur.

L'invention se rapporte à un détecteur multi-radiations comportant un scintillateur, un dispositif photosensible, caractérisé en ce qu'il comporte en outre un dispositif de filtrage, et en ce que le scintillateur est d'un type qui, en réponse à la réception d'un nombre N de radiations correspondant à des énergies différentes émet un même nombre N de rayonnements de longueurs d'ondes différentes, le dispositif de filtrage réalisant une sélection spatiale desdits N rayonnements émis par le scintillateur, et en ce que le dispositif photosensible est constitué d'une pluralité de cellules photosensibles qui sont arrangées par groupe de N cellules, chaque cellule d'un groupe recevant l'un des N rayonnements émis par le scintillateur et délivrant un signal représentatif de l'intensité de ce rayonnement.

Le scintillateur est composé d'un mélange de N matériaux luminescents, chaque matériau étant sensible à une seule des N radiations incidentes et émettant chacun suivant une longueur d'onde différente.

Le dispositif photosensible est constitué d'une pluralité de cellules photosensibles, telles que des photodiodes, qui sont arrangées par groupe de N cellules, chaque cellule d'un groupe étant affectée à la détection de l'un des N rayonnements émis par le scintillateur.

Les N rayonnements émis par le scintillateur sont séparés spatialement par une pluralité de cellules élémentaires de filtrage, autant que de cellules photosensibles, qui sont également arrangées par groupe de N, chaque cellule élémentaire de filtrage étant prévue, d'une part, pour ne transmettre que l'un des N rayonnements émis par le scintillateur, et, d'autre part, qu'une cellule photosensible d'un groupe ne reçoive que l'un des N rayonnements émis par le scintillateur.

Il est à noter que la réalisation en elle-même, d'un scintillateur à l'aide de plusieurs matériaux luminescents, est indiquée dans la Demande de Brevet en Grande-Bretagne n° GB-A-2033285. Mais les buts sont différents de ceux de la présente invention, car dans ce document les matériaux luminescents sont destinés à uniformiser les réponses d'une pluralité de scintillateurs.

D'autres caractéristiques et avantages de la présente invention apparaîtront à la lecture de la description suivante d'un exemple particulier de réalisation, ladite description étant faite en relation avec le dessin en annexe dans lequel :

— la figure 1 est un schéma fonctionnel de principe en coupe en partie transversale et en partie longitudinale d'un détecteur double énergie selon la présente invention, et

— la figure 2 est une vue détaillée en coupe longitudinale d'une partie du scintillateur et des photodiodes du détecteur double énergie selon l'invention.

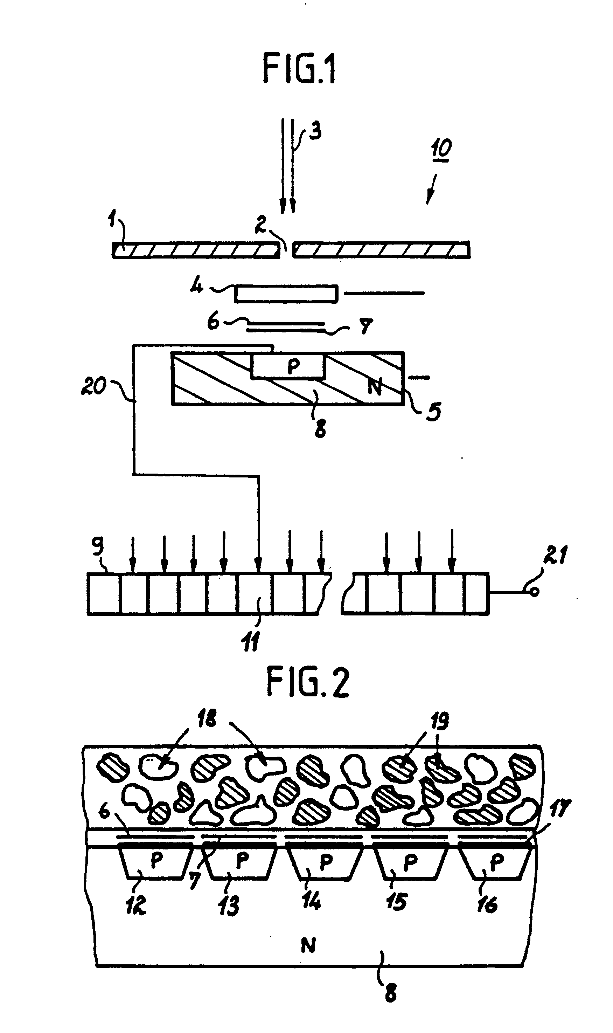

Un détecteur double énergie 10 selon la présente invention est constitué d'une barrette ou boîtier (non représenté) ayant la largeur de l'objet à analyser, par exemple un corps humain, cette barrette présentant les éléments suivants en partant de la partie supérieure qui reçoit les rayons X qui ont traversé l'objet à analyser. D'abord une couche de plomb 1 percée, sur toute la longueur de la barrette, d'une fente de collimation 2 pour les rayons X représentés par la double flèche 3. Selon la présente invention, un seul scintillateur 4 est disposé sous la fente de collimation 2 et les éléments qui le composent seront décrits en relation avec la figure 2. Le scintillateur 4 recouvre un alignement de photodiodes 5 dont la coupe transversale de la figure 1 n'en montre qu'une seule sous la forme d'une jonction P-N, la couche N constituant le substrat 8. Entre l'alignement de photodiodes 5 et le scintillateur 4 sont interposés deux filtres 6 et 7 dont les bandes de transmission dépendent de la composition du scintillateur 4. Enfin, un dispositif à transfert de charges 9, représenté en coupe longitudinale, qui a la longueur de l'alignement de photodiodes 5, est disposé sous ce dernier et lui est connecté électriquement de manière que chaque photodiode soit reliée à une cellule du dispositif de tranfert de charges 9, par exemple par un conducteur 20. Le conducteur 20 connecte donc la partie P de la jonction P-N d'une photodiode à l'électrode d'entrée d'une cellule 11 du dispositif de tranfert de charges 9. Une borne de sortie 21 de ce dispositif est connectée à un circuit électronique de pré-traitement (non représenté).

La vue en coupe longitudinale de la figure 2 montre de manière plus précise l'arrangement du scintillateur, des filtres et des photodiodes.

Le scintillateur 4 est une couche qui a, par exemple, une épaisseur de quelques centaines de microns et qui est constituée d'un mélange de deux poudres par exemple. Ces poudres ont la particularité chacune, d'une part, de présenter une sensibilité maximale dans une certaine gamme d'énergie du rayonnement X reçu et, d'autre part, d'émettre un rayonnement de longueur d'onde différente. C'est ainsi que l'une des poudres est par exemple de l'oxyde d'yttrium dopé à l'europium qui a une sensibilité optimale pour des rayons X de vingt kev et qui émet une lumière rouge de longueur d'onde 0,61 micron. L'autre poudre est par exemple de l'oxysulfure de gadolinium dopé au terbium qui a une sensibilité optimale pour des rayons X de cinquante kev et qui émet une lumière verte de longueur d'onde 0,54 micron.

L'alignement de photodiodes 5 est constitué sur le substrat 8 en silicium de type N sur la face supérieure duquel on réalise une succession de zones 12 à 16 du type P de manière à obtenir autant de jonctions P-N. C'est sur cette face supérieure du substrat 8 que sont disposées les électrodes métalliques de liaison (référence 17), une par diode, sur lesquelles seront soudées les conducteurs tels que celui référencé 20 (figure 1). De manière connue, ces électrodes sont transparentes aux rayonnements rouge et vert du scintillateur 4.

Ce sont sur ces électrodes que sont réalisés les filtres 6 et 7, l'un 6 qui ne laisse passer que le rayonnement rouge et l'autre 7 qui ne laisse passer que le rayonnement vert. C'est ainsi que la photodiode 12 est recouverte d'un filtre rouge tandis que la photodiode adjacente 13 est recouverte d'un filtre vert et ainsi de suite pour toutes les photodiodes de l'alignement. On a donc une alternance de filtres rouge et vert. Un telle disposition de filtres peut par exemple être obtenue par photogravure et dépôts de couches organiques appropriées ne laissant passer que la lumière rouge et que la lumière verte. On remarquera que les filtres 6 et 7 sont sensiblement dans un même plan contrairement à ce qui a été représenté sur la figure 1.

Comme on l'a décrit ci-dessus en relation avec la figure 1, la couche du scintillateur 4 est disposée sur la couche constituant les filtres rouge et vert et est constituée de grains de poudre d'oxysulfure de gadolinium dopé au terbium 18 et de grains de poudre d'oxyde d'yttrium dopé à l'europium 19.

Les techniques à mettre en oeuvre pour réaliser le détecteur double énergie qui vient d'être décrit sont connues de l'homme de métier et sont par exemple mises en oeuvre pour réaliser des rétines de caméra couleur à l'état solide. Ces techniques permettent de fabriquer des photodiodes et filtres associés qui ont des dimensions en surface de l'ordre du micron à plusieurs millimètres.

Le choix des dimensions en surface des diodes dépendra essentiellement de la précision de l'analyse à effectuer. C'est ainsi que pour une précision d'analyse de 0,2 millimètre, les deux photodiodes adjacentes devront couvrir un carré de 0,2 millimètre de côté, soit une dimension pour chaque photodiode de 0,1 millimètre dans le sens de la longueur de la barrette et de 0,2 millimètre dans le sens de la largeur. Ceci résulte du fait que chaque point de l'objet à examiner doit pouvoir être analysé par deux photodiodes adjacentes.

Cette dimension des photodiodes détermine l'épaisseur maximale de la couche du scintillateur car plus cette couche est épaisse, plus la diffusion qu'elle introduit est grande, ce qui diminue la précision. Une formule empirique conduit à avoir une épaisseur de couche qui ne dépasse pas trois fois la dimension de la photodiode, soit 0,3 millimètre pour l'exemple cité ci-dessus.

Dans l'exemple particulier de réalisation qui vient d'être décrit, on a indiqué l'utilisation de l'oxyde d'yttrium dopé à l'europium pour des rayons X de faible énergie. On peut remplacer cet oxyde par des oxysulfures d'yttrium activés à l'europium qui ont une émission également rouge. On peut aussi utiliser des oxysulfures d'yttrium activés par du terbium qui a une émission verte et des sulfures de zinc qui ont une émission bleue.

Pour les rayons X de plus grande énergie, on peut remplacer l'oxysulfure de gadolinium dopé par du terbium par les tungstates de cadmium qui ont aussi une émission verte et le tungstate de calcium qui a, par contre, une émission bleue.

Comme on l'a indiqué ci-dessus, il faut donc choisir dans ces différents matériaux deux d'entre eux qui ont des émissions et des sensibilités optimales différentes.

L'exemple particulier de réalisation qui a été décrit comporte deux matériaux pour un détecteur double énergie mais on comprend que l'on pourrait réaliser un détecteur triple énergie ou multi-énergies par un choix judicieux des matériaux composant le scintillateur.

Bien entendu, les photodiodes et les filtres associés devront être prévus en conséquence pour effectuer les mesures des différents rayonnements lumineux émis par le scintillateur. C'est ainsi qu'il faudra trois filtres et trois photodiodes par point d'analyse élémentaire pour un détecteur triple énergie.

Par ailleurs, aucune hypothèse n'a été faite sur la sensibilité des photodiodes selon le rayonnement mais il est clair que l'on peut améliorer les performances du détecteur en réalisant des photodiodes de sensibilités différentes selon le rayonnement qu'elles doivent détecter.

Dans la description, on a supposé que l'invention s'appliquait à des détecteurs de rayons X, notamment en radiologie médicale, mais elle s'applique aussi à des détecteurs d'autres radiations, telles que les radiations gamma et neutroniques à condition bien entendu de choisir pour le scintillateur des matériaux sensibles à ces radiations et émettant des rayonnements différents.

**Revendications**

1. Détecteur multi-radiations comportant un scintillateur (4, 18, 19), un dispositif photosensible (5, 8, 12 à 16), caractérisé en ce qu'il comporte en outre un dispositif de filtrage (6, 7), et en ce que le scintillateur est d'un type qui, en réponse à la réception d'un nombre N de radiations correspondant à des énergies différentes émet un même nombre N de rayonnements de longueurs d'ondes différentes, le dispositif de filtrage (6, 7) réalisant une sélection spatiale desdits N rayonnements émis par le scintillateur, et en ce que le dispositif photosensible est constitué d'une pluralité de cellules photosensibles (12 à 16) qui sont arrangées par groupe de N cellules, chaque cellule d'un groupe étant affectée à la détection de l'un des N rayonnements émis par le scintillateur (4) et délivrant un signal représentatif de l'intensité de ce rayonnement.

2. Détecteur multi-radiations selon la revendication 1, caractérisé en ce qu'il comprend en outre un dispositif à transfert de charges (9) qui reçoit les signaux électriques fournis par le dispositif photosensible (5).

3. Détecteur multi-radiations selon la revendication 1 ou 2, caractérisé en ce que le scintillateur (4) est composé d'un mélange de N matériaux luminescents (18, 19), chaque matériau étant sensible à une seule des N radiations incidentes et émettant chacun suivant une longueur d'onde différente.

4. Détecteur multi-radiations selon l'une quelconque des revendications 1 à 3, caractérisé en ce que le dispositif de filtrage (6, 7) est constitué d'une pluralité de cellules élémentaires de filtrage qui sont arrangées par groupe de N, chaque cellule élémentaire de filtrage étant prévue pour ne transmettre que l'un des N rayonnements émis par le scintillateur.

5. Détecteur multi-radiations selon la revendication 4, caractérisé en ce que chaque cellule élémentaire de filtrage (6 ou 7) d'un groupe est associée à une cellule photosensible (12 ou 13) d'un même groupe de cellules photosensibles de manière qu'une cellule photosensible d'un groupe ne reçoive que l'un des N rayonnements émis par le scintillateur.

6. Détecteur multi-radiations selon la revendication 3 ou 4 ou 5, caractérisé en ce que les cellules photosensibles (12, 13) d'un groupe sont connectées chacune à une cellule d'un dispositif à transfert de charges (9) associé à ce groupe de manière à pouvoir traiter en parallèle les signaux correspondant à un même rayonnement.

7. Détecteur multi-radiations selon la revendication 3 ou 4 ou 5 ou 6, caractérisé en ce que les cellules photosensibles sont des photodiodes (12, 13) disposées côte à côte et en ce que les N photodiodes d'un groupe ont une surface totale de réception des N rayonnements égale à celle de la plus petite surface à examiner.

8. Détecteur multi-radiations selon la revendication 7, caractérisé en ce que les cellules de filtrages (6, 7) sont obtenues par dépôt de matières de couleur appropriée sur chacune des surfaces de réception desdites photodiodes.

9. Détecteur multi-radiations selon la revendication 8, caractérisé en ce le mélange composant le scintillateur est déposé sur les cellules de filtrage (6, 7).

10. Application d'un détecteur multi-radiations selon l'une quelconque des revendications précédentes 3 à 9 à un détecteur de rayons X à double énergie, caractérisé en ce que l'un des deux matériaux luminescents pour les radiations haute énergie peut être le tungstate de cadmium, ou de l'oxysulfure de gadolinium dopé par du terbium, ou encore du tungstate de calcium et, en ce que l'autre matériau luminescent pour les radiations faible énergie peut être de l'oxysulfure de lantane ou d'yttrium activé par du terbium, ou des oxydes ou oxysulfures d'yttrium activées à l'europium ou encore les sulfures de zinc, les composants d'un couple étant choisis pour que leurs émissions luminescentes soient différentes de manière à pouvoir les séparer spatialement par ledit filtrage.

**Patentansprüche**

1. Mehrstrahlungsdetektor mit einem Scintillator (4, 18, 19) und einer lichtempfindlichen Vorrichtung (5, 8, 12 bis 16), dadurch gekennzeichnet, daß er außerdem eine Filtervorrichtung (6, 7) aufweist und daß der Scintillator so ausgebildet ist, daß er bei Empfang einer Anzahl N von verschiedenen Energien entsprechenden Strahlungen eine gleich große Anzahl N von Strahlungen verschiedener Wellenlängen ausgibt, wobei die Filtervorrichtung (6, 7) eine räumliche Selektion der N vom Scintillator ausgehenden Strahlungen durchführt, und daß die lichtempfindliche Vorrichtung aus einer Vielzahl von Fotozellen (12 bis 16) besteht, die in Gruppen von N Zellen angeordnet sind, wobei jede Zelle einer Gruppe der Erfassung von einer der N vom Scintillator (4) ausgegebenen Strahlungen zugeteilt ist und ein für die Intensität dieser Strahlung repräsentatives Signal liefert.

2. Mehrfachstrahlungsdetektor nach Anspruch 1, dadurch gekennzeichnet, daß er außerdem eine Ladungstransfervorrichtung (9) aufweist, die die von der lichtempfindlichen Vorrichtung (5) gelieferten elektrischen Signale empfängt.

3. Vielfachstrahlungsdetektor nach Anspruch 1 oder 2, dadurch gekennzeichnet, daß der Scintillator (4) aus einer Mischung von N lumineszenten Materialien (18, 19) besteht, von denen jedes nur auf eine der N ankommenden Strahlungen anspricht und jedes eine andere Wellenlänge aussendet.

4. Vielfachstrahlungsdetektor nach einem beliebigen der Ansprüche 1 bis 3, dadurch gekennzeichnet, daß die Filtervorrichtung (6, 7) aus einer Vielzahl von Elementarfilterzellen besteht, die in Gruppen von N Zellen angeordnet sind, wobei jede elementare Filterzelle zur Übertragung nur einer der N vom Scintillator ausgesandten Strahlungen vorgesehen ist.

5. Vielfachstrahlungsdetektor nach Anspruch 4, dadurch gekennzeichnet, daß jede Elementarfilterzelle (6 oder 7) einer Gruppe einer Fotozelle (12 oder 13) einer gleichen Gruppe von Photozellen zugeordnet ist, derart, daß eine Fotozelle einer Gruppe nur eine der vom Scintillator ausgesandten N Strahlungen empfängt.

6. Vielfachstrahlungsdetektor nach Anspruch 3 oder 4 oder 5, dadurch gekennzeichnet, daß die Fotozellen (12, 13) einer Gruppe je an eine Zelle einer Ladungstransfervorrichtung (9) angeschlossen sind, die dieser Gruppe zugeordnet ist, derart, daß die einer gleichen Strahlung entsprechenden Signale parallel verarbeitet werden können.

7. Vielfachstrahlungsdetektor nach Anspruch 3 oder 4 oder 5 oder 6, dadurch gekennzeichnet, daß die Fotozellen Fotodioden (12, 13) sind, die nebeneinander angeordnet sind, und daß die N Fotodioden einer Gruppe eine Gesamtempfangsoberfläche für die N Strahlungen gleich der der kleinsten zu untersuchenden Oberfläche besitzen.

8. Vielfachstrahlungsdetektor nach Anspruch 7, dadurch gekennzeichnet, daß die Filterzellen (6, 7) durch Aufbringen von Materialien geeigneter Farbe auf jede der die Strahlung empfangenden Oberflächen der Fotodioden erhalten werden.

9. Vielfachstrahlungsdetektor nach Anspruch 8, dadurch gekennzeichnet, daß die Mischung, aus der der Scintillator zusammengesetzt ist, auf die Filterzellen (6, 7) aufgebracht ist.

10. Anwendung eines Vielfachstrahlungsdetektors nach einem beliebigen der vorhergehenden Ansprüche 3 bis 9 auf einen Röntgenstrahlungsdetektor mit zwei Energiestufen, dadurch gekennzeichnet, daß eines der beiden lumineszenten Materialien für die höherenergetische Strahlung Cadmiumwolframat oder mit Terbium dotiertes Gadoliniumoxysulfid oder auch Kalziumwolframat ist, und daß das andere lumineszente Material für die niedrigerenergetische Strahlung Lantanoxysulfid oder Yttriumoxysulfid ist, das mit Terbium aktiviert ist, oder mit Europium aktiviertes Yttriumoxid oder Yttriumoxysulfid oder auch Zinksulfid ist, wobei die Komponenten eines Paares so gewählt werden, daß ihre lumineszenten Emissionen sich voneinander unterscheiden, so daß sie räumlich durch die Filterung getrennt werden können.

## Claims

1. A multiradiation detector comprising a scintillator (4, 18, 19) and a photosensitive device (5, 8, 12 to 16), characterized in that it further comprises a filtering device (6, 7), and that the scintillator is of a type which, in reply to receiving a given number N of radiations corresponding to different energies, transmits a same number N of radiations of different wavelengths, the filtering device (6, 7) performing a spatial selection of said N radiations emitted by the scintillator, and that the photosensitive device is constituted by a plurality of photocells (12 to 16) which are arranged in groups of N cells, each cell of one group being allocated to the detection of one of the N radiations emitted by the scintillator (4) and supplying a signal depending on the intensity of this radiation.

2. A multiradiation detector according to claim 1, characterized in that it further comprises a charge transfer device (9) receiving the electric signals which are supplied by the photosensitive device (5).

3. A multiradiation detector according to claim 1 or 2, characterized in that the scintillator (4) is composed of a mixture of N luminescent materials (18, 19), each material being sensitive to only one of the N incident radiations and each material transmitting a radiation of a different wavelength.

4. A multiradiation detector according to any one of claims 1 to 3, characterized in that the filtering device (6, 7) is constituted by a plurality of elementary filtering cells which are arranged in groups of N cells, each elementary filtering cell being adapted for transmitting only one of the N radiations emitted by the scintillator.

5. A multiradiation detector according to claim 4, characterized in that each elementary filtering cell (6 or 7) of a group is associated to a photocell (12 or 13) of a same group of photocells such that any photocell of one group only receives one of the N radiations emitted by the scintillator.

6. A multiradiation detector according to claim 3 or 4 or 5, characterized in that the photosensitive cells (12, 13) of one group are connected each to a cell of a charge transfer device (9) associated to this group such that it is able to process in parallel the signals corresponding to a given radiation.

7. A multiradiation detector according to claim 3 or 4 or 5 or 6, characterized in that the photocells are photodiodes (12, 13) disposed side by side, and that the N photodiodes of one group have a global surface for receiving the N radiations which is equal in size to the smallest surface to be examined.

8. A multiradiation detector according to claim 7, characterized in that the filtering cells (6, 7) are obtained by depositing material of appropriate colour on each one of the reception surfaces of said photodiodes.

9. A multiradiation detector according to claim 8, characterized in that the mixture composing the scintillator is deposited on the filtering cells (6, 7).

10. The use of a multiradiation detector according to any one of the preceding claims 3 to 9 to a twin energy X-ray detector, characterized in that one of the luminescent materials for the higher energy radiation may be cadmium tungstate or gadolinium oxysulfide doped with terbium or still calcium tungstate, and that the other luminescent material for the low energy radiation may be lantanium oxysulfide or yttrium oxysulfide activated by terbium, or yttrium oxide or yttrium oxysulfide activated by europium or still zinc sulfide, the components of one pair being selected such that their luminescent emissions are different in order to be spatially separatable by said filtering.

# FIG.1

# FIG.2